Europäisches Patentamt

European Patent Office

Office européen des brevets

(11) Veröffentlichungsnummer: **0 150 768 B1**

(12) **EUROPÄISCHE PATENTSCHRIFT**

(45) Veröffentlichungstag der Patentschrift: **13.05.92**

(21) Anmeldenummer: **85100417.6**

(22) Anmeldetag: **17.01.85**

(51) Int. Cl.⁵: **G02B 6/44**

(54) **Selbsttragendes optisches Kabel.**

(30) Priorität: **01.02.84 DE 3403355**

(43) Veröffentlichungstag der Anmeldung:
**07.08.85 Patentblatt 85/32**

(45) Bekanntmachung des Hinweises auf die
Patenterteilung:
**13.05.92 Patentblatt 92/20**

(84) Benannte Vertragsstaaten:
**AT CH DE FR GB IT LI**

(56) Entgegenhaltungen:
**EP-A- 0 042 996**

**PATENT ABSTRACTS OF JAPAN, Band 5, Nr.
202 (P-95)[874], 22. Dezember 1981; & JP - A -
56 125 708**

**ELECTRICAL COMMUNICATION, Band 54, Nr.
3, 1979, Seiten 245-250; C.K. KAO "Optical
Fiber Communication Technology"**

(73) Patentinhaber: **AEG KABEL Aktiengesellschaft
Bonnenbroicher Strasse 2-14
W-4050 Mönchengladbach 2(DE)**

(72) Erfinder: **Haag, Helmut, Dipl.-Phys.
Herberstrasse 1
W-5177 Titz(DE)**
Erfinder: **Nothofer, Klaus, Dipl. -Ing.
Urdenbacher Dorfstrasse 29
W-4000 Düsseldorf 13(DE)**

(74) Vertreter: **Langer, Karl-Heinz, Dipl.-Ing.
Licentia Patent-Verwaltungs-GmbH Theodor-
Stern-Kai 1
W-6000 Frankturt/Main 70(DE)**

**Beschreibung**

Die Erfindung bezieht sich auf eine Anordnung der im Oberbegriff des Anspruchs 1 bezeichneten und allgemein bekannten Art.

Aus der JP-A 56 125 708 ist ein derartiges optisches Kabel bekannt, bei dem alle Bewehrungselemente mit gleicher Schlagrichtung um die Seele verseilt sind und die mit der Seele geführten optischen Adern mit gleicher Schlagrichtung wie die Bewehrungselemente verseilt sind. Da zwischen der Bewehrungsschicht und der Schicht, in der die optischen Adern verseilt sind, noch drei weitere Schichten liegen, ist fraglich, ob die Drehbewegung des Kabels sich von der äußeren auf die inneren Schichten in gewünschtem Maße überträgt.

Derartige Kabel werden freihängend zwischen relativ weit beabstandeten Haltepunkten, beispielsweise Masten, aufgehängt. Man ist bestrebt, das Gewicht solcher Kabel klein zu halten und die Festigkeit gegen Zugbelastung bei möglichst geringer Dehnung zu vergrößern. Deshalb müssen Bewehrungselemente im Kabel angeordnet sein, welche Zugbeanspruchungen aufnehmen, so daß diese nicht auf die empfindlichen optischen Fasern übertragen werden können. Da gewisse Längungen des Kabels dabei unvermeidbar sind, hat man die optischen Fasern innerhalb der Kabelhüllen mit Überlängen, beispielsweise gewellt, geführt. Die Überlängen mußten so gewählt werden, daß die größtmögliche durch Zugkraft bedingte Kabellängung aufgefangen werden konnte. Überlängen der optischen Fasern sind jedoch nur in begrenztem Ausmaß vorsehbar, wenn erhöhte Dämpfungen wegen gekrümmter Führung der Fasern vermieden werden sollen. Infolgedessen muß man sich bemühen, die Kabeldehnungen möglichst klein zu halten. Das gelingt beispielsweise durch parallele, unverseilte oder allenfalls mit sehr langem Schlag um die Kabelseele verseilten Bewehrungselemente. Die Biegbarkeit eines solchen Kabels ist jedoch gering.

Eine gute Biegefähigkeit erreicht man andererseits durch mit kleinerer Schlaglänge verseilte Bewehrungselemente, wobei allerdings dicke und schwere Kabel mit zwei Lagen von mit gegensinnigem Drall verseilten Bewehrungselementen vorgesehen wurden, weil bei Zugbelastungen Verdrehungen des Kabels vermieden werden sollten, welche bei einlagig mit kurzem Schlag verseilten Bewehrungselementen entgegengesetzt zum Verseildrall entstehen. Derartige Verdrehungen von drehmomentfrei aufgehängten Kabeln waren gefürchtet, weil sie zusätzliche Längsdehnungen des Kabels und unzulässige mechanische Beanspruchungen der optischen Fasern verursachen.

Der Erfindung liegt die Aufgabe zugrunde, das Kabel der eingangs genannten Art bei geringem Durchmesser und kleinem Gewicht so zu gestalten, daß auch ohne erhebliche Überlängen der optischen Fasern negative Auswirkungen der Zugbelastung des Kabels von den optischen Fasern ferngehalten werden.

Die Lösung gelingt durch die im Anspruch 1 gekennzeichneten Merkmale. Vorteilhafte Weiterbildungen der Erfindung sind in den Unteransprüchen gekennzeichnet.

Im Gegensatz zur herrschenden Meinung wird also vorgeschlagen, die Bewehrungselemente einer einlagigen Armierung mit relativ kleiner Schlaglänge um die Kabelseele zu verseilen.

Wenn optische Fasern in gleicher Richtung wie die Bewehrungselemente verseilt sind und wenn deren Schlaglänge auf die der Bewehrungselemente unter Berücksichtigung der unterschiedlichen Verseildurchmesser erfindungsgemäß abgestimmt werden, so läßt sich im Idealfall erreichen, daß sich die Wendel einer optischen Faser in Kabelrichtung infolge der Torsion des Kabels in gleichem Ausmaß zugspannungsfrei streckt, wie sich Kabelmantel und Bewehrungselemente infolge der Zugkraft dehnen.

In der Praxis braucht dieser Idealfall nur angenähert zu werden, wenn die optischen Fasern ohnehin mit gewisser Überlänge geführt sind, wie beispielsweise bei optischen Fasern, die lose und frei beweglich in einer Schlauchhülle wendelförmig geführt sind.

Es ist zwar grundsätzlich möglich, mit elementaren Mitteln die optimalen Verhältnisse für Schlaglänge und Verseildurchmesser der Bewehrungselemente und der optischen Fasern theoretisch zu ermitteln. Da aber dazu die physikalische Konstanten (Elastizitätsmodul) und geometrischen Daten aller Kabelaufbauelemente bekannt sein müssen, wobei insbesondere das Haftverhalten zwischen den Bewehrungselementen und der Kabelhülle schwer voraussagbar ist, empfiehlt sich eine experimentelle Bestimmung der günstigsten Werte.

Aufgrund von Messungen an verschiedenartig aufgebauten Kabeln wurden die im Anspruch 1 angegebenen Bemessungsbereiche ermittelt. Bei Beachtung der dort angegebenen Regeln ergaben sich leichte optische Kabel mit geringem Durchmesser, welche ohne Halteseile freinängend als Luftkabel geführt werden können. Vorteilhafte und fertigungstechnisch gut realisierbare Daten für die optischen Fasern ergeben sich bei Beachtung der Regeln nach Anspruch 2.

Speziell für solche Kabel, bei denen die Bewehrungselemente aus Glasfaserschnüren und die Kabelhüllen aus plastomerem oder elastomerem Polyolefin bestehen, hat sich die Bemessungsregel nach Anspruch 3 als vorteilhaft erwiesen.

Die Erfindung wird anhand eines in der Zeichnung dargestellten vorteilhaften Ausführungsbeispiels näher erläutert.

Fig. 1   zeigt einen Querschnitt durch ein erfindungsgemäßes optisches Kabel

Fig. 2   zeigt eine Skizze zur Definition von Verseildurchmesser und Schlaglänge.

Innerhalb einer mit Bewehrungselementen 1 versehenen Kabelhülle 2 sind optische Fasern 3 angeordnet, welche innerhalb von Schläuchen 4 lose und mit gewisser Überlänge geführt sind.

Die optischen Adern 5, welche Schläuche 4 und darin die optischen Fasern 3 aufweisen, sind in einer Lage mit dem mittleren Verseildurchmesser $d_F$ verseilt und bilden die äußerste Verseillage der Kabelseele. Die Bewehrungselemente 1 sind mit gleicher Drallrichtung um die Seele verseilt, wobei $d_K$ der mittlere Verseildurchmesser ist, also der Durchmesser des Kreises, auf welchem die Mittelpunkte der Bewehrungselemente liegen.

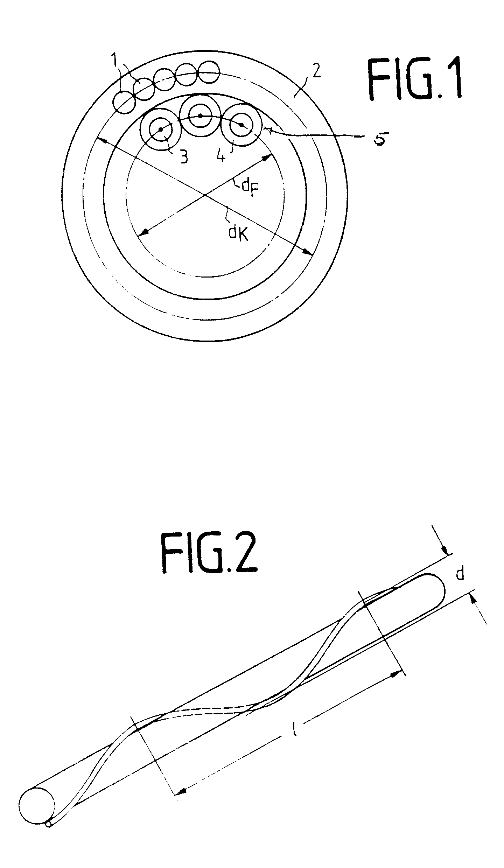

Figur 2 läßt erkennen, was unter der Schlaglänge 1 eines Verseilelementes mit dem Verseildurchmesser d zu verstehen ist.

**Patentansprüche**

1. Selbsttragendes optisches Kabel mit einem Kabelmantel und mit einer Seele aus mehreren optischen Adern (5) von denen jede eine Schlauchhülle (4) und darin mit Überlänge verlegt, eine optische Faser (3) aufweist; mit um die Seele verseilten Bewehrungselementen (1), die mit gleicher Schlagrichtung um die Seele einlagig verseilt sind, wobei die in der Seele geführten Adern (5) mit gleicher Schlagrichtung wie die Bewehrungselemente (1) verseilt sind und eine Wendel (5) aus Adern bilden, **dadurch gekennzeichnet**, daß alle Bewehrungselemente (1) mit einer Schlaglänge $l_k$ um die Seele verseilt sind, welche kleiner ist als das 100fache des mittleren Durchmessers $d_K$ des Kreises, auf welchem die Mittelpunkte der Bewehrungselemente (1) liegen, die eine Bewehrungslage bilden, und daß die Schlaglänge $l_F$ der in einer Lage mit dem mittleren Durchmesser $d_F$ verseilten optischen Adern nach der Gleichung

$$(d_F/d_K)^2 = x \cdot l_F/l_K$$

bemessen ist, wobei x eine dimensionslose Zahl zwischen 1,3 und 4 ist, so daß sich unter einer Zugkraft die Wendel in Kabelrichtung in Folge der Torsion des Kabels und des Kontaktes zwischen Kabelmantel (2) und Seele im wesentlichen im gleichen Maße zugspannungsfrei streckt wie sich Kabelmantel und Bewehrungselemente (1) in Folge der Zugkraft dehnen.

2. Kabel nach Anspruch 1, dadurch gekennzeichnet, daß die Schlaglänge $l_K$ der Bewehrungselemente das 20- bis 60fache des mittleren Verseildurchmessers $d_K$ beträgt.

3. Kabel nach einem der Ansprüche 1 oder 2, dadurch gekennzeichnet, daß die dimensionslose Zahl x bei Verwendung von als Glasfaserschnüre ausgebildeten Bewehrungselementen, welche von einem Mantel aus plastomerem oder elastomerem Polyolefin-Kunststoff umgeben sind, einen Wert zwischen 1,45 und 3,2 hat.

**Claims**

1. Self-supporting optical cable with a core consisting of several optical conductors (5) each of which comprises a sleeve (4) and, laid therein with overlength, an optical fibre (3); with armouring elements (1) stranded around the core which are stranded in a single layer around the core with equal twist, in which the conductors (5) laid in the core are stranded with the same twist as the armouring elements (1) and form a coil of conductors (5), **characterised in that** all the armouring elements (1) are stranded around the core with a length of twist $l_K$ which is smaller than 100 times the mean diameter $d_K$ of the armouring layer, and that the length of twist $l_F$ of the optical conductors stranded in a layer with the mean diameter $d_F$ is dimensioned according to the equation.

$$(d_F/d_K)^2 = x \cdot l_F/l_K,$$

where x is a non-dimensional number between 1.3 and 4, so that under a tensile force the coil extends free of tensile stress substantially to the same extent, in the cable direction due to the torsion of the cable and the contact between cable jacket (2) and core, as cable jacket and armouring elements (1) expand as a result of the tensile force.

2. Cable according to claim 1, **characterised in that** the length of twist $l_K$ of the armouring elements comes to 20 to 60 times the mean strand diameter $d_K$.

3. Cable according to one of claims 1 or 2, **characterised in that** the non-dimensional number x, if armouring elements formed as fibre glass cords are used, which are surrounded by a jacket of plastomeric or elastomeric polyolefin plastics material, has a value between 1.45 and 3.2.

**Revendications**

1. Câble optique autoporteur comportant : une âme en plusieurs brins optiques (5) qui présentent chacun une enveloppe-tuyau souple (4) et, posée dans celle-ci avec de la surlongueur, une fibre optique (3); des éléments d'armature (1) câblés autour de l'âme, cela en une seule couche avec le même sens d'enroulement autour de l'âme, les brins (5) passant dans l'âme étant câblés avec le même sens d'enroulement que les éléments d'armature (1) et formant une hélice de brins (8), caractérisé par le fait que tous les éléments d'armature (1) sont câblés autour de l'âme avec un pas d'enroulement $l_K$ qui est inférieur à 100 fois le diamètre moyen $d_K$ du cercle sur lequel se trouvent les centres des éléments d'armature, lesquels forment une couche d'armature, et par le fait que le pas d'enroulement $l_F$ des brins optiques câblés en une couche de diamètre moyen $d_F$ satisfait à la relation

$$(d_F/d_K)^2 = x.l_F/l_K$$

x étant un nombre sans dimension entre 1,3 et 4, et par le fait qu'en présence d'une force de traction dans la direction du câble, l'hélice du câble, du fait de la torsion du câble et du contact entre enveloppe (2) du câble et âme, s'allonge sans contrainte de traction, sensiblement dans une mesure égale à celle dans laquelle l'enveloppe du câble et les éléments d'armature (1) s'allongent sous l'effet de la force de traction.

2. Câble selon revendication 1, caractérisé par le fait que le pas d'enroulement $l_K$ des éléments d'armature vaut de 20 à 60 fois le diamètre de câblage moyen $d_K$.

3. Câble selon l'une des revendications 1 ou 2, caractérisé par le fait que des éléments d'armature étant réalisés en tant que cordons en fibres de verre entourés par une gaine de matière plastique polyoléfine plastomère ou élastomère, le nombre sans dimension x possède une valeur comprise entre 1,45 et 3,2.

FIG.1

FIG.2